**Europäisches Patentamt**

**European Patent Office**

**Office européen des brevets**

(11) Veröffentlichungsnummer: **0 235 646**
A2

(12) # EUROPÄISCHE PATENTANMELDUNG

(21) Anmeldenummer: **87102063.2**

(22) Anmeldetag: **13.02.87**

(51) Int. Cl.⁴: **B 05 D 5/06,** C 09 D 5/36

(30) Priorität: **26.02.86  DE 3606154**

(43) Veröffentlichungstag der Anmeldung: **09.09.87**
**Patentblatt 87/37**

(84) Benannte Vertragsstaaten: **AT BE CH DE ES FR GB IT LI NL SE**

(71) Anmelder: **Merck Patent Gesellschaft mit beschränkter Haftung, Frankfurter Strasse 250, D-6100 Darmstadt (DE)**

(72) Erfinder: **Ambrosius, Klaus, Dr., Waldschmidtstrasse 65, D-6000 Frankfurt (DE)**
Erfinder: **Esselborn, Reiner, Dr., Küchlerstrasse 6, D-6100 Darmstadt (DE)**
Erfinder: **Franz, Klaus-Dieter, Dr., Insterburger Strasse 12, D-6233 Kelkheim (DE)**
Erfinder: **Brand-Hofmeister, Franz, Mittelstrasse 14, D-6086 Riedstadt 3 (DE)**
Erfinder: **Kieser, Manfred, Dr., Händelstrasse 39, D-6100 Darmstadt 23 (DE)**
Erfinder: **Föhring, Rolf, Dr., Berliner Allee 38, D-6108 Weiterstadt (DE)**

(54) **Lackierungsverfahren unter Verwendung von Perlglanzpigmenten.**

(57) Basislacke für Mehrschichtlackierungen, die eine Basislack-Schicht und eine darauf befindliche Klarlack-Schicht enthalten und wobei die Basislack-Schicht ein Perlglanzpigment auf der Basis von mit Metalloxiden beschichteten Glimmerschuppen enthält, werden besonders vorteilhaft hergestellt unter Verwendung von Perlglanzpigmenten mit einer Teilchengröße im wesentlichen zwischen 15 und 35 μm.

EP 0 235 646 A2

0235646

Merck Patent Gesellschaft
mit beschränkter Haftung
6100 Darmstadt

Lackierungsverfahren unter Verwendung
von Perlglanzpigmenten

Die Erfindung betrifft ein Verfahren zum Lackieren von Objekten mit einer eine Basislack-Schicht und eine darauf befindliche Klarlack-Schicht enthaltenden Mehrschichtlackierung, wobei der Basislack zumindest ein Perlglanzpigment auf der Grundlage von mit Metalloxiden beschichteten Glimmerschuppen enthält.

Perlglanzpigmente werden bisher schon für eine Reihe von Anwendungen benutzt, insbesondere in der Kosmetik. Auch zur Verwendung in Autolacken wurden Perlglanzpigmente schon vorgeschlagen; eine breite Durchsetzung auf diesem Gebiet konnte bisher jedoch nicht erzielt werden, obwohl Perlglanzpigmente aufgrund ihrer optischen Eigenschaften besonders interessante und ansprechende Lackierungen ermöglichen. Neben modischen Anschauungen ist der Grund dafür darin zu suchen, daß an Autolacke, die ihrer Bestimmung entsprechend über lange Zeiten z. T. extremen Witterungsbedingungen ausgesetzt sind, besonders hohe Qualitätsanforderungen gestellt werden müssen.

Die Farbigkeit der Perlglanzpigmente auf Basis von mit Metalloxiden beschichteten Glimmerschuppen beruht auf Interferenzerscheinungen bei der Reflexion des einfallenden Lichtes an der dünnen Metalloxidschicht. Da die Interferenz vom Winkel des einfallenden Lichts bzw. dem Betrachtungswinkel abhängig ist, muß eine möglichst parallele Ausrichtung der Pigmente in der Lackschicht erfolgen. Es ist außerdem bekannt, daß an jeder Ecke oder Kante eines Pigmentteilchens eine diffuse Lichtstreuung erfolgt, die zu einer Verweißlichung der Farbe und zu Einbußen an Glanz und Farbintensität führt. Sowohl die planparallele Ausrichtung der Pigmentteilchen, die im Augenblick der Aufbringung des Lackes auf die zu lackierende Oberfläche erfolgen muß, als auch Glanz und Farbkraft der Pigmente werden begünstigt, wenn Pigmentteilchen mit relativ großem Hauptdurchmesser verwendet werden.

Es wurden daher bisher in Lacken und Anstrichmitteln, in denen hoher Glanz und hohe Farbkraft erwünscht war, vor allem Perlglanzpigmente mit Teilchengrößen von etwa 10-70 μm verwendet, wobei die Hauptmenge der Teilchen in der Größenordnung von etwa 30 bis 50 μm lag. Obwohl diese Pigmente für sehr viele Anwendungen sehr gut geeignet sind, erhält man bei der Verwendung in Autolacken jedoch überraschenderweise keine guten Ergebnisse. Vielmehr ist bei Verwendung der in der Serienlackierung üblichen Polykondensationssysteme festzustellen, daß die Verwendung der üblichen Perlglanzpigmente zu Lacken mit schlechtem Klarlackstand und relativ rauher und daher schlecht glänzender Oberfläche führt.

Aus der DE-OS 32 07 936 ist ein Verfahren zur Lackierung von Objekten mit einer Basislackschicht und einer Klarlackschicht bekannt, wobei in der Basislackschicht Perlglanzpigmente mit einer Teilchengröße zwischen 5 und 25 μm enthalten sind. Obwohl damit bereits qualitativ sehr gute Lackierungen erzielt wurden, bestand doch das Bedürfnis nach weiter verbesserten Lackierungen, die

0235646

insbesondere in bezug auf Glanz, Klarlackstand und Verarbeitbarkeit in automatischen Lackieranlagen optimale Eigenschaften besitzen.

Es wurde nun gefunden, daß die an sich schon sehr guten Eigenschaften der bekannten Lackierungen verbessert werden können durch den Einsatz von Perlglanzpigmenten mit einer Teilchengröße, die im wesentlichen zwischen 15 und 35 µm liegt.

Gegenstand der Erfindung ist daher ein Verfahren zum Lackieren von Objekten mit einer eine Basislack-Schicht und eine darauf befindliche Klarlack-Schicht enthaltenden Mehrschichtlackierung, wobei der Basislack zumindest ein Perlglanzpigment auf der Grundlage von mit Metalloxiden beschichteten Glimmerschuppen enthält, d a d u r c h   g e k e n n z e i c h n e t, daß Perlglanzpigmente mit einer Teilchengröße im wesentlichen zwischen 15 und 35 µm enthalten sind.

Gegenstand der Erfindung ist auch ein Basislack für eine Mehrschichtlackierung, die eine Basislack-Schicht enthält, dadurch gekennzeichnet, daß er mit Perlglanzpigmenten auf der Grundlage von mit Metalloxiden beschichteten Glimmerschuppen einer Teilchengröße im wesentlichen zwischen 15 und 35 µm pigmentiert ist.

Gegenstand der Erfindung ist schließlich auch die Verwendung von Perlglanzpigmenten auf der Grundlage von mit Metalloxiden beschichteten Glimmerschuppen mit einer Teilchengröße von im wesentlichen zwischen 15 und 35 µm zur Pigmentierung von Basislacken für eine eine Basislack-Schicht und eine Klarlack-Schicht enthaltende Mehrschichtlackierung.

Die erfindungsgemäßen Lackschichten zeigen bei einem sehr guten Glanz einen guten Klarlackstand und sind ohne Probleme in automatischen Lackieranlagen herzustellen. Wesentlich dafür ist neben der Verwendung der Pigmente mit der erfindungsgemäßen Teilchengröße auch die Verwendung eines relativ engen Kornbandes. Zumindest 50 % der Teilchen, vorzugsweise jedoch zumindest 75 % der Teilchen liegen in dem engeren Bereich zwischen 25 und 35 µm, wobei vorzugsweise weniger als 0,5 % der Teilchen einen Durchmesser von mehr als 40 µm besitzen. Wenn möglich sollte darauf geachtet werden, daß möglichst überhaupt keine Teilchen diesen Durchmesser überschreiten.

Die verwendeten Perlglanzpigmente bestehen aus blättchen- bzw. schuppenartigen Teilchen, die eine im Verhältnis zur Länge und Breite relativ geringe Dicke besitzen. Der Teilchendurchmesser, auf den hier Bezug genommen wird, ist daher der durch die Länge bzw. Breite der Teilchen gebildete größte Durchmesser.

Die verwendeten Pigmente sind an sich bekannt oder können nach bekannten Verfahren hergestellt werden. Solche Verfahren sind z. B. beschrieben in den deutschen Patentschriften 14 67 468 und 20 09 566. Dabei werden Glimmerplättchen mit Metalloxiden, insbesondere mit Titandioxid, in einer Schichtdicke belegt, die zur Erzeugung von Interferenzfarben erster, zweiter oder auch höherer Ordnung geeignet ist. Diese Pigmente können neben oder an Stelle von Titandioxid noch Zusätze anderer farbloser oder auch gefärbter Metalloxide in der Schicht oder darauf enthalten oder können durch Vor- oder Nachbehandlungen gegenüber Witterungseinflüssen stabilisiert werden, sowie mit farbigen Überzügen versehen werden. Solche Pigmente sind beispielsweise beschrieben in den deutschen Offenlegungsschriften 22 44 298, 23 13 331, 23 13 332, 24 29 762, 25 22 573, 29 28 287, 20 60 850, 21 06 613 und 22 15 191.

Im Hinblick auf die Verwendung in Autolacken sind die besonders licht- und wetterbeständigen Rutilpigmente entsprechend den deutschen Offenlegungsschriften 22 14 545 und 25 22 572 besonders bevorzugt. Um die Pigmente in der erfindungsgemäßen Teilchengröße zu erhalten, wird lediglich das Ausgangsmaterial, in der Regel weißer Glimmer des Muscovit-Typs, durch Vermahlen und Klassieren in der gewünschten Teilchengrößenverteilung gewonnen. Da der Teilchendurchmesser durch die Belegung mit Metalloxiden kaum verändert wird, ist diese Teilchengrößenverteilung mit der des daraus gewonnenen Pigments praktisch identisch.

Die so gewonnenen Pigmente können dann auf übliche Weise in konventionelle Lacksysteme eingearbeitet werden. In der Regel wird dafür ein in 1-15 Minuten physikalisch trocknender Lack verwendet. Er enthält als Bindemittel ölfreie oder ölhaltige Polyester oder hitzehärtbare Acrylatharze, gegebenenfalls im Gemisch mit Melaminharzen, wie sie bei der Serienlackierung in Automobilfabriken oder Reparaturwerkstätten üblich sind. Zusätzlich zu diesen Bindemitteln können Celluloseäther und/oder -ester bzw. -halbester, insbesondere Celluloseacetobutyrat eingesetzt werden. Die Bindemittel und sonstigen lacktechnischen Zusatzstoffe und Lösungsmittel, die zur Vervollständigung der Rezeptur benötigt werden, sind dem Fachmann geläufig. Insbesondere können die Lacke analog den für Metallic-Basis-Lacke üblichen Zusammensetzungen hergestellt werden.

Die erfindungsgemäßen Lacke enthalten zur Erzeugung eines Metallic-Effekts keine Aluminiumbronzen sondern Glimmerpigmente. Diese werden in der Regel in einer Menge von etwa 0,5 bis etwa 10 Gew.%, bezogen auf den Basislack bei Applikationsviskosität (üblicherweise 16-18 sec Din A4), bzw. 5 bis 30 Gew.% bezogen auf den Festkörpergehalt im Basislack zugesetzt.

Neben den Perlglanzpigmenten können auch andere transparente Farbpigmente dem Lack zugefügt werden. Wenn dazu eine andere Farbe als die Interferenzfarbe des Perlglanzpigmentes gewählt wird, führt dies zu interessanten Changiereffekten, wobei je nach Blickwinkel die Farbe des Farbpigmentes oder die Interferenzfarbe des Perlglanzpigmentes dominiert.

Die gegebenenfalls zusätzlich verwendeten Farbpigmente können auch in einer als Grundierung bzw. auf die Grundierung aufgebrachten zusätzlichen Lackschicht enthalten sein, so daß sich je nach der Farbe der Farblackschicht und der darüberliegenden, das Perlglanzpigment enthaltenden Effektlackschicht (Basislackschicht) sehr interessante Farbeffekte ergeben.

Die erfindungsgemäßen Lacke können wie die bisher bekannten Lacke aufgetragen werden, z. B. also durch elektrostatische oder konventionelle Spritzverfahren. In der Regel wird der Perlglanzpigmente enthaltende Basislack in Schichtdicken von etwa 10 bis 30 µm aufgetragen. Nach Ablüften von 2 bis 5 Minuten - wie es in der Autoindustrie üblich ist - wird auf den erfindungsgemäßen Basislack noch eine Klarlackschicht in einer Dicke von etwa 20-40 µm aufgetragen. Nach dem Einbrennen bei in der Autoindustrie üblichen Bedingungen von 30 bis 20 Minuten bei 120 bis 150 °C sind die Lackierungen gebrauchsfertig. Die Lackierung weist einen sehr guten Glanz und Klarlackstand auf, so daß mit der vorliegenden Erfindung ein wesentlicher Fortschritt auf dem Gebiet der Autolacke erzielt wird.

In den nun folgenden Beispielen sind alle Anteile als Gewichtsteile definiert. In den Beispielen werden folgende Farbpigmentpasten verwendet.

0235646

1. Schwarzpaste 1

45 Teile Celluloseacetobutyrat, 20 %ig in Butylacetat; 24 Teile Dynapol H 704, 65 %ig in Xylol;
6 Teile Maprenal MF 600, 55 %ig in Butanol/Xylol;
5 Teile Spezialschwarz IV; 9 Teile Butylacetat;
11 Teile Xylol

2. Schwarzpaste 2

Zusammengesetzt wie Schwarzpaste 1, nur anstelle
von 5 Teilen Spezialschwarz IV sind 5 Teile Ruß
FW 200 enthalten

3. Weißpaste

32 Teile Titandioxid, Titan RN 59; 39,2 Teile
Celluloseacetobutyrat, 20 %ig in Butylacetat;
25,6 Teile Dynapol H 704, 65 %ig in Xylol;
3,2 Teile Xylol

4. Blaupaste 1

9 Teile Irgazinblau 3 GT; 45 Teile Celluloseacetobutyrat, 20 %ig in Butylacetat; 24 Teile
Dynapol H 704, 65 %ig in Xylol; 12 Teile Butylacetat, 10 Teile Xylol

5. Blaupaste 2

10 Teile Paliogenblau L 6470; 50 Teile Celluloseacetobutyrat, 20 %ig in Butylacetat; 26 Teile
Dynapol H 704, 65 %ig in Xylol; 9 Teile Butylacetat; 5 Teile Xylol

Beispiel 1

Zu 14,75 Teilen Celluloseacetobutyrat 20 %ig in Butylacetat werden 15,5 Teile Additol XL 460; 1 Teil Maprenal
MF 600, 25 %ig in Butanol/Xylol und 10,3 Teile
Dynapol H 704, 65 %ig in Xylol gegeben. Dazu werden
18,5 Teile einer 6 %igen AC-Copolymer 405-Lösung in
Butylacetat/Xylol gegeben sowie 4,5 Teile einer 50 %igen
Ultramoll 1-Lösung in Xylol, 0,3 Teile Baysilonöl OL,
10 %ig in Xylol, 3,5 Teile GB-Ester und 1,5 Teile Äthylglykol. Danach werden 25 Teile Schwarzpaste 2 untergemischt und 5 Teile eines nach dem Verfahren der
DOS 25 22 572 hergestellten Rutilpigmentes mit grüner
Interferenzfarbe mit einer Teilchengrößenverteilung, bei
der zumindest 50 % der Teilchen im Bereich von 25 bis
35 µm liegen eingerührt. Der so erhaltene Basislack kann
nach dem Verdünnen mit Butylacetat 85 % auf 16-18 Sekunden
DIN A 4 im konventionellen oder elektrostatischen Spritzverfahren appliziert werden. Nach 3 bis 6 Minuten Ablüftzeit, wird dieser Basislack mit einem Melamin/Acrylharz-
Klarlack in einer Schichtdicke von 30 bis 40 µm überlackiert und bei Brennbedingungen von 30 bis 20 Minuten
bei 120 bis 150 °C eingebrannt. Die mit diesem Lack erhaltene Beschichtung zeigt einen sehr guten Klarlackstand
und einen Grün-Schwarz-Changiereffekt.

Beispiel 2

Es wird analog Beispiel 1 ein Basislack gemischt, der
jedoch anstelle von Schwarzpaste 2 die gleiche Gewichtsmenge Schwarzpaste 1 enthält und anstelle des grünen
Interferenzpimentes 5 Teile eines nach der DOS 25 22 572
hergestellten kupferfarbenen Rutilpigmentes mit einer
Teilchengrößenerteilung, die bei der zumindest 75 % der
Teilchen im Bereich von 25 bis 35 µm liegen.

Die entsprechend Beispiel 1 aufgebrachten Lackschichten zeigen einen guten Klarlackstand und einen Schwarz-Kupfer-Changiereffekt.

Beispiel 3

Zu 11 Gewichtsteilen Celluloseacetobutyrat, 20 %ig in Butylacetat, werden 15,5 Teile Additol XL 460, 2,1 Teile Maprenal MS 600, 55 %ig in Butanol/Xylol und 8,5 Teile Dynapol H 704, 65 %ig in Xylol gegeben. Anschließend werden 17 Teile AC Copolymer, 4,35 Teile Ultramoll 1, 4 Teile GB-Ester, 1,5 Teile Ethylglykol und 0,3 Teile Baysilonöl OL hinzugefügt. Danach werden 20,25 Teile Blaupaste 2, 4,5 Teile Blaupaste 1, 0,75 Teile Weißpaste und 5 Teile eines nach der DOS 25 22 572 hergestellten Goldpigmentes mit der Teilchengrößenverteilung, bei der zumindest 50 % der Teilchen im Bereich 25 bis 35 µm liegen unter Rühren zugefügt. Applizierung entsprechend Beispiel 1 ergibt einen Lack mit sehr gutem Klarlackstand und einem Blau-Gold-Changiereffekt.

Die in den Beispielen verwendeten Warenzeichen haben folgende Bedeutung:

| | |
|---|---|
| Dynapol H 704 | gesättigtes Polyesterharz mit einer OH-Zahl von 80-120 der Dynamit-Nobel AG |
| Maprenal MG 600 | butyliertes Melaninharz hoher Reaktivität der Hoechst AG |
| Spezialschwarz IV | feiner Ruß mit einer Korngröße um 0,1 µm |

| | |
|---|---|
| Ruß FW 200 | feiner Ruß mit einer Korngröße um 0,1 µm der Degussa |
| Titan RN 59 | Titandioxid, Rutilform, stabilisiert der Titangesellschaft |
| Irgazinblau 3 GT | organisches Blaupigment transparent ausgemahlen der Ciba-Geigy AG |
| Paliogenblau L 6470 | organisches Blaupigment transparent ausgemahlen der BASF AG |
| Additol XL 460 | Verlaufmittel (Melaninharz) 20 %ig in höhersiedenden Alkoholen) der Hoechst AG |
| AC-Copolymer 405 | Fixiermittel für plättchenförmige Pigmente (Polyäthylenwachs, löslich in organischen Lösungsmitteln) von Nordmann u. Rassmann |
| Ultramoll 1 | Weichmacher der BASF AG |
| Baysilonöl OL | Verlaufmittel (hydroxyfunktionelles Silikonöl) der Bayer AG |
| GB-Ester | Ester als Lösungsmittel der Hoechst AG |

Merck Patent Gesellschaft
mit beschränkter Haftung
6100 Darmstadt

0235646

## Patentansprüche

1. Verfahren zum Lackieren von Objekten mit einer eine Basislack-Schicht und eine darauf befindliche Klarlack-Schicht enthaltenden Mehrschichtlackierung, wobei der Basislack zumindest ein Perglanzpigment auf der Grundlage von mit Metalloxiden beschichteten Glimmerschuppen enthält, d a d u r c h   g e k e n n - z e i c h n e t, daß Perlglanzpigmente mit einer Teilchengröße im wesentlichen zwischen 15 und 35 μm enthalten sind.

2. Verfahren nach Anspruch 1, dadurch gekennzeichnet, daß zumindest 50 % der Perglanzpigmentteilchen eine Größe zwischen 25 und 35 μm besitzen.

3. Verfahren nach Anspruch 1 oder 2, dadurch gekennzeichnet, daß weniger als 0,5 % der Perlglanzpigmentteilchen eine Größe von oberhalb 40 μm besitzen.

4. Basislack für eine Mehrschichtlackierung, die eine Basislack-Schicht und eine darauf befindliche Klarlack-Schicht enthält, dadurch gekennzeichnet, daß er mit Perlglanzpigmenten auf der Grundlage von mit Metalloxiden beschichteten Glimmerschuppen einer Teilchengröße im wesentlichen zwischen 15 und 35 μm pigmentiert ist.

- 2 -

0235646

5. Basislack gemäß Anspruch 4, dadurch gekennzeichnet, daß zumindest 50 % der Teilchen der Perlglanzpigmente eine Größe zwischen 25 und 35 µm besitzen.

6. Basislack gemäß Anspruch 4 oder 5, dadurch gekennzeichnet, daß weniger als 0,5 % der Teilchen der Perlglanzpigmente eine Größe von oberhalb 40 µm besitzen.

7. Verwendung von Perlglanzpigmenten auf der Grundlage von mit Metalloxiden beschichteten Glimmerschuppen mit einer Teilchengröße von im wesentlichen zwischen 15 und 35 µm zu Pigmentierung von Basislacken für eine Mehrschichtlackierung, die eine Basislack-Schicht und eine Klarlack-Schicht enthält.